# EUROPEAN PATENT APPLICATION

(11) **EP 4 825 779 A1**
(43) Date of publication of application: **21.10.2026**
(21) Application number: 25219501.1
(22) Date of filing: 28.11.2025
(51) Int. Cl.: B66B 25/00, B66B 31/00

(54) **CONVEYING DEVICE, METHOD FOR CONVEYING DEVICE, PROGRAM PRODUCT**

(30) Priority: 17.04.2025 CN 202510486621
(71) Applicant: OTIS Elevator Company, Farmington, CT 06032 (US)
(72) Inventor: Cheng, Lifei, Hangzhou, 310019 (CN); Li, Jun, Hangzhou, 310019 (CN); Xu, Kaisheng, Jiaxing, 314408 (CN); Zhong, Haizhong, Hangzhou, 310019 (CN)
(74) Representative: Winter, Brandl - Partnerschaft mbB

(57) **Abstract**

The present disclosure provides a conveying device, comprising a first sensor and a second sensor arranged respectively on the conveying device; a first sensed member arranged on a first side of a step of the conveying device in such a manner that during operation of the conveying device, the first sensor detects the first sensed member to generate a sensing signal, thereby forming a first signal; a second sensed member arranged on a second side of the step of the conveying device in such a manner that during operation of the conveying device, the second sensor detects the second sensed member to generate a sensing signal, thereby forming a second signal; and a controller configured to generate a control signal for adjusting lubrication, when it is determined, based on a time difference between corresponding sensing signals in the first and second signals, that lubrication of step chains needs adjustment. A corresponding method and a program product are provided as well.

## Description

### TECHNICAL FIELD

The present disclosure relates to a conveying device, and in particular to detecting an elongation difference between step chains on both sides of the conveying device.

### BACKGROUND ART

During the long-term operation of an escalator, the step chains on the left and right sides usually undergo different degrees of elongation. When the length of the step chains on both sides differs greatly, it will cause the steps to tilt, resulting in the gap between the steps and skirt panels fail to meet standard requirements, and may even lead to accidents such as clamp skirt panels or step collision with comb teeth. Currently, elongation and wear are mainly mitigated through periodic cleaning and lubrication. It is therefore necessary to propose a more improved solution.

### SUMMARY OF THE INVENTION

The present disclosure provides a conveying device and a method for a conveying device to at least solve one of the aforementioned problems.

The conveying device according to the embodiments of the present disclosure can comprise a first sensor and a second sensor arranged respectively on the conveying device; a first sensed member arranged on a first side of a step of the conveying device, such that the first sensor detects the first sensed member to generate a sensing signal during operation of the conveying device, thereby forming a first signal; a second sensed member arranged on a second side of the step of the conveying device, such that the second sensor detects the second sensed member to generate a sensing signal during operation of the conveying device, thereby forming a second signal; and a controller configured to generate a control signal for adjusting lubrication, when it is determined, based on a time difference between corresponding sensing signals in the first and second signals, that lubrication of step chains needs to be adjusted.

Optionally or additionally, in the conveying device, the controller is further configured to determine an elongation difference between a first side step chain and a second side step chain based on the time difference between the corresponding sensing signals in the first signal and the second signal and an operation speed of the conveying device; and generate the control signal for adjusting lubrication when the elongation difference indicates that the lubrication of step chains needs to be adjusted.

Optionally or additionally, in the conveying device, the corresponding sensing signals in the first signal and the second signal are the sensing signals within the same cycle in the first signal and the second signal formed after the conveying device has operated for a predetermined duration.

Optionally or additionally, in the conveying device, the controller is further configured to compare the elongation difference with a predetermined threshold; and generate a control signal that causes the degree of lubrication of the step chain on the side with greater elongation of the first side step chain and the second side step chain to be higher than that of the other side when the comparison result indicates that the lubrication of the step chains needs to be adjusted.

Optionally or additionally, in the conveying device, one of the first signal and the second signal is a predefined set signal and the other is a non-set signal, and the controller is configured to obtain the time difference by subtracting the time of the corresponding sensing signal in the non-set signal from the time of the sensing signal in the set signal.

Optionally or additionally, in the conveying device, the predetermined threshold is a threshold range, and the controller is further configured to: generate a control signal that causes the degree of lubrication of the step chain on the side corresponding to the set signal to be higher than the degree of lubrication of the step chain on the other side when the conveying device is an upward-moving escalator, and the calculated elongation difference is positive and falls outside the threshold range; generate a control signal that causes the degree of lubrication of the step chain on the side corresponding to the non-set signal to be higher than the degree of lubrication of the step chain on the other side when the conveying device is an upward-moving escalator, the calculated elongation difference is negative and falls outside the threshold range; generate a control signal that causes the degree of lubrication of the step chain on the side corresponding to the set signal to be higher than the degree of lubrication of the step chain on the other side when the conveying device is a downward-moving escalator, the calculated elongation difference is negative and falls outside the threshold range; generate a control signal that causes the degree of lubrication of the step chain on the side corresponding to the non-set signal to be higher than the degree of lubrication of the step chain on the other side when the conveying device is a downward-moving escalator, and the calculated elongation difference is positive and falls outside the threshold range.

Optionally or additionally, the value of the predetermined threshold is related to arrangements of the first sensor, the first sensed member, the second sensor, and the second sensed member.

Optionally or additionally, in the conveying device, the first sensor is arranged on a skirt panel of the conveying device corresponding to the first side of the step, and the second sensor is arranged on a skirt panel of the conveying device corresponding to the second side of the step.

Optionally or additionally, in the conveying device, the first sensed member and the second sensed member are respectively arranged on the first side and the second side of the same step, and the first sensor and the second sensor are symmetrically arranged relative to the step of the conveying device.

Optionally or additionally, in the conveying device, the first sensed member and the first sensor, and the second sensed member and the second sensor are arranged in a manner such that the time difference between corresponding sensing signals in the first signal and the second signal is less than 1/2 of the duration of one operation cycle of the conveying device.

Optionally or additionally, in the conveying device, the first sensed member and the second sensed member are arranged on the same step, or offset by m steps, where m is one of 1, 2, 3, 4, and 5; and/or the first sensor and the second sensor are respectively arranged on the skirt panels on two sides of the same step, or offset by n steps in the length direction of the conveying device and disposed respectively on the skirt panels on two sides, where n is one of 1, 2, 3, 4, and 5.

Optionally or additionally, in the conveying device, any one of the first sensed member and the second sensed member is provided in a plurality; and/or any one of the first sensor and the second sensor is provided in a plurality.

Optionally or additionally, in the conveying device, the first sensor and the second sensor are color sensors respectively, and the first sensed member and the second sensed member are color markers disposed respectively on the step.

According to another aspect of the disclosure, a method for a conveying device is provided. The conveying device comprises a first sensed member arranged on a first side of a step, a first sensor arranged on the conveying device and configured to detect the first sensed member to generate a sensing signal thereby forming a first signal when the conveying device is in operation, a second sensed member arranged on a second side of the step of the conveying device, and a second sensor arranged on the conveying device and configured to detect the second sensed member to generate a sensing signal thereby forming a second signal when the conveying device is in operation, and the method for conveying device may comprise generating a control signal for adjusting lubrication when it is determined that the lubrication of the step chains needs to be adjusted, based on a time difference between corresponding sensing signals in the first signal and the second signal.

Optionally or additionally, the method further comprises determining an elongation difference between a first side step chain and a second side step chain based on the time difference between the corresponding sensing signals in the first signal and the second signal and an operation speed of the conveying device; and generating the control signal for adjusting lubrication when the elongation difference indicates that lubrication of step chains needs to be adjusted.

Optionally or additionally, according to the method, the corresponding sensing signals in the first signal and the second signal are the sensing signals within the same cycle in the first and second signals formed after the conveying device has operated for a predetermined duration.

Optionally or additionally, the method further comprises comparing the elongation difference with a predetermined threshold; and generating a control signal that causes the degree of lubrication of the step chain on the side with greater elongation of the first side step chain and the second side step chain to be higher than that of the other side when the comparison results indicate that lubrication of the step chains needs to be adjusted.

Optionally or additionally, according to the method, one of the first and second signals is a predefined set signal and the other is a non-set signal, and the time difference is obtained by subtracting the time of the corresponding sensing signal in the non-set signal from the time of the sensing signal in the set signal.

Optionally or additionally, according to the method, the predetermined threshold is a threshold range. The method further comprises generating a control signal that causes the degree of lubrication of the step chain on the side corresponding to the set signal to be higher than the degree of lubrication of the step chain on the other side when the conveying device is an upward-moving escalator, the calculated elongation difference is positive and falls outside the threshold range; generating a control signal that causes the degree of lubrication of the step chain on the side corresponding to the non-set signal to be higher than the degree of lubrication of the step chain on the other side when the conveying device is an upward-moving escalator, and the calculated elongation difference is negative and falls outside the threshold range; generating a control signal that causes the degree of lubrication of the step chain on the side corresponding to the set signal to be higher than the degree of lubrication of the step chain on the other side when the conveying device is a downward-moving escalator, and the calculated elongation difference is negative and falls outside the threshold range; and generating a control signal that causes the degree of lubrication of the step chain on the side corresponding to the non-set signal to be higher than the degree of lubrication of the step chain on the other side when the conveying device is a downward-moving escalator, and the calculated elongation difference is positive and falls outside the threshold range.

A program product, comprising program instructions that, when executed by a conveying device, can implement the method described herein.

In the aforementioned various examples, optionally or additionally, the conveying device is an escalator or a travelator.

### BRIEF DESCRIPTION OF THE DRAWINGS

The present disclosure will be more fully understood with reference to the drawings and the detailed description of the following embodiments, wherein:
FIG. 1 illustrates an escalator 10;
FIG. 2 is a schematic side view of an escalator;
FIG. 3 is a schematic diagram of an escalator according to some embodiments of the present disclosure;
FIG. 4 shows a first signal and a second signal formed during operation of the escalator in the initial state in the example illustrated by FIG. 3;
FIG. 5 shows a scenario in which the escalator illustrated in FIG. 3 is in a non-initial state;
FIG. 6 shows a first signal and a second signal in a non-initial state as illustrated in FIG. 5, when the escalator is an upward-moving escalator;
FIG. 7 is a schematic diagram illustrating the positions of sensors and sensible members according to some other examples of the present disclosure;
FIG. 8 is a schematic diagram illustrating the positions of sensors and sensible members according to some further examples of the present disclosure;
FIG. 9 is a schematic diagram of a method for an escalator according to one embodiment of the present disclosure.

### DETAILED DESCRIPTION OF THE INVENTION

In order to facilitate those skilled in the art to accurately understand the subject matter claimed in the present disclosure, the embodiments of the present disclosure will be described hereinafter in conjunction with the detailed description of the drawings.

As used hereinafter, the word "example" or "for example" or "exemplarily" means "serving as an example, an embodiment or for illustrative purpose". Any embodiment described using "example" or "for example" or "exemplarily" is not necessarily construed as superior to or better than other embodiments.

The conveying device herein can comprise an escalator, a travelator and other conveying devices for transporting passengers and/or articles, in which the travelator may also be referred to as moving walkways, and the conveying device may also be referred to as a transport device, transport system, conveying system, passenger conveyor, passenger conveyor system, or the like. Despite that the following embodiments of the present disclosure all use an escalator as an example of a conveying device to illustrate the present disclosure, it should be understood that various examples of the comb plate described in conjunction with the escalator can be applied to other conveying devices or conveying systems, such as a travelator.

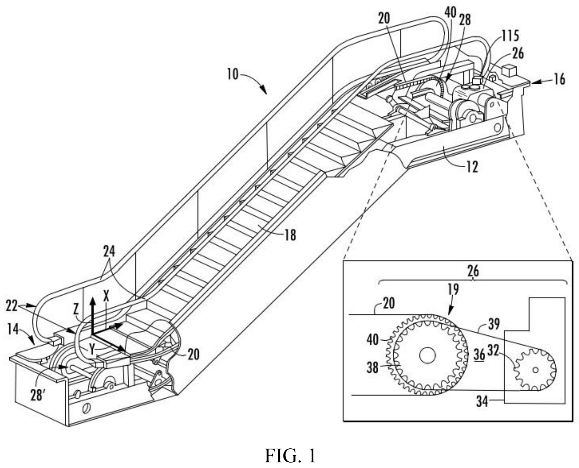

FIG. 1 illustrates an escalator 10. It should become apparent in the ensuing description that the invention is applicable to other passenger conveyor systems, such as moving walks. The escalator 10 generally includes a truss 12 extending between a lower landing 14 and an upper landing 16. A plurality of sequentially connected steps or tread plates 18 are connected to a step chain 20 and travel through a closed loop path within the truss 12. A pair of balustrades 22 includes moving handrails 24. A drive machine 26, or drive system, is typically located in a machine space 28 under the upper landing 16; however, an additional machine space 28' can be located under the lower landing 14. The drive machine 26 is configured to drive the steps 18 and/or handrails 24 through the step chain 20. The drive machine 26 operates to move the steps 18 in a chosen direction at a desired speed under normal operating conditions.

The steps 18 make a 180 degree heading change in a turn-around area 19 located under the lower landing 14 and upper landing 16. The steps 18 are pivotally attached to the step chain 20 and follow a closed loop path of the step chain 20, running from one landing to the other, and back again..

The drive machine 26 includes a first drive member 32, such as motor output sheave, connected to a drive motor 34 through a belt reduction assembly 36 including a second drive member 38, such as an output sheave, driven by a tension member 39, such as an output belt. The first drive member 32 in some embodiments is a driving member, and the second drive member 38 is a driven member.

As used herein, the first drive member 32 and/or the second drive member 38, in various embodiments, may be any type of rotational device, such as a sheave, pulley, gear, wheel, sprocket, cog, pinion, etc. The tension member 39, in various embodiments, can be configured as a chain, belt, cable, ribbon, band, strip, or any other similar device that operatively connects two elements to provide a driving force from one element to another. For example, the tension member 39 may be any type of interconnecting member that extends between and operatively connects the first drive member 32 and a second drive member 38. In some embodiments, as shown in FIG. 1, the first drive member 32 and the second drive member may provide a belt reduction. For example, first drive member 32 may be approximately 75 mm (2.95 inches) in diameter while the second drive member 38 may be approximately 750 mm (29.53 inches) in diameter. The belt reduction, for example, allows the replacement of sheaves to change the speed for 50 or 60 Hz electrical supply power applications, or different step speeds. However, in other embodiments the second drive member 38 may be substantially similar to the first drive member 32.

As noted, the first drive member 32 is driven by drive motor 34 and thus is configured to drive the tension member 39 and the second drive member 38. In some embodiments the second drive member 38 may be an idle gear or similar device that is driven by the operative connection between the first drive member 32 and the second drive member 38 by means of tension member 39. The tension member 39 travels around a loop set by the first drive member 32 and the second drive member 38, which herein after may be referred to as a small loop. The small loop is provided for driving a larger loop which consists of the step chain 20, and is driven by an output sheave 40, for example. Under normal operating conditions, the tension member 39 and the step chain 20 move in unison, based upon the speed of movement of the first drive member 32 as driven by the drive motor 34.

The escalator 10 also includes a controller 115 that is in electronic communication with the drive motor 34. The controller 115 may be located, as shown, in the machine space 28 of the escalator 10 and is configured to control the operation of the escalator 10. For example, the controller 115 may provide drive signals to the drive motor 34 to control the acceleration, deceleration, stopping, etc. of the tread plates 18 through the step chain 20. The controller 115 may be an electronic controller including a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

The present disclosure will take an escalator as an example of a conveying device for illustration; however, it should be understood that the structure and method described in conjunction with such examples can also be applied to a travelator. When the structure and method described in these examples are applied to a travelator, in view of the upward and downward directions described for the escalator, they can be adaptively adjusted to correspond to the travelator's forward and reverse travel directions.

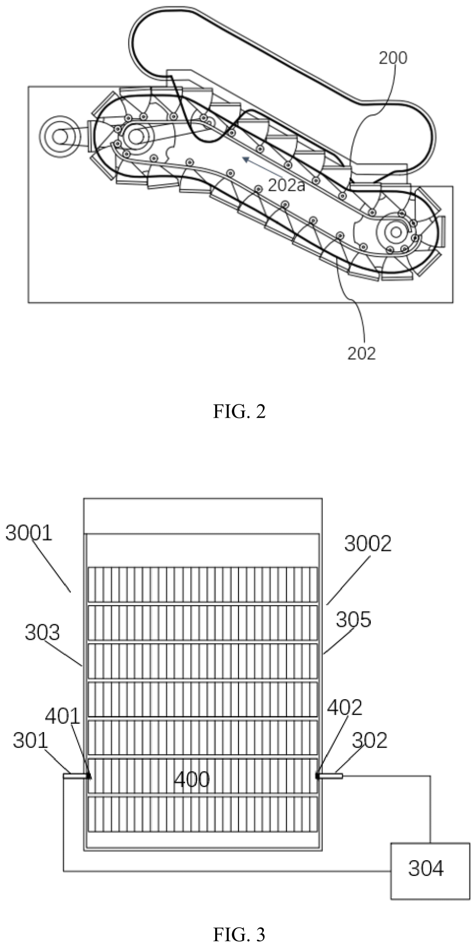

FIG. 2 is a side schematic view of an escalator. In the examples of the present disclosure, each step of the escalator travels one loop along the travel path from its current position back to the same position, completing one cycle or period. For example, when the escalator is an upward-moving escalator, one step 200 of the steps travels one full loop along the travel path 202 from the indicated position in the direction 202a back to said indicated position. This constitutes one cycle for the step 200. Meanwhile, the other steps also complete one cycle, or in other words, the escalator completes one cycle. It can be understood that when the escalator is a downward-moving escalator, the step 200 travels in the opposite direction.

The step chain is formed by a series of chain links and is configured to drive the steps to move. Briefly, one or more steps are fixed to each chain link, and the power supplied by the motor is transmitted to the step chain through intermediate components, thereby enable the step chain to drive the steps to move.

In examples of the present disclosure, two sides of the escalator are respectively referred to as a first side and a second side. In view of the context of the present disclosure, the end of a step located on the first side of the escalator is referred to as the first side of the step, while the end of the step located on the second side of the escalator is referred to as the second side of the step; the skirt panel located on the first side of the escalator is referred to as a first side skirt panel, while the skirt panel located on the second side of the escalator is referred to as a second side skirt panel; the step chain located on the first side of the escalator is referred to as a first side step chain, while the step chain located on the second side of the escalator is referred to as a second side step chain, and so forth. It should be noted that the first side and the second side are relative. For example, when the left side of the escalator is the first side, the right side is the second side; when the right side is the first side, the left side is the second side.

In the examples of the present disclosure, the initial state refers to the condition where the escalator steps are not tilted; in other words, it refers to the state where the step chains on both sides are not elongated or are elongated to the same extent.

FIG. 3 is a schematic diagram of an escalator according to some embodiments of the present disclosure. In this embodiment, by way of example and not limitation, a first sensed member 401 is arranged on the first side 3001 of steps, and a second sensed member 402 is arranged on the second side 3002 of the steps. The first sensor 301 is arranged on the escalator such that, when the escalator operates, the first sensor generates a sensing signal by detecting the first sensed member 401, and a second sensor 302 is arranged on the escalator such that, when the escalator operates, the second sensor generates a sensing signal by detecting the second sensed member 402. During the operation of the escalator, each time the first sensor senses the first sensed member, one sensing signal is generated, and a plurality of such sensing signals form a first signal; each time the second sensor senses the second sensed member, one sensing signal is generated, and a plurality of such sensing signals form a second signal.

According to some examples of the present disclosure, the first sensor and the second sensor are color sensors respectively, and the first sensed member and the second sensed member are color markers disposed on the step respectively. The sensing signals generated by the color sensors when sensing color markers are pulse signals. Specifically, when the color sensor does not detect the color marker, the output signal is at a low level; when the color sensor detects the color marker, the output signal is at a high level. Alternatively, the first sensor and the second sensor may be magnetic sensors, and the first sensed member and the second sensed member are sensed members made of materials detectable by the magnetic sensors and disposed on both sides of a step. Alternatively, the first sensor and the second sensor may be different types of sensors, and the first and second sensed members may also be different types of sensed members. For example, a sensor on one side is a color sensor, while a sensor on the other side is a magnetic sensor.

The first sensor 301 and the second sensor 302 transmit the generated sensing signals to the controller 304, i.e., both the first and second signals are transmitted to the controller 304. When it is determined, based on the time difference between the corresponding sensing signals in the first and second signals, that lubrication operation of step chains needs adjustment, the controller 304 generates a control signal for adjusting lubrication. As an example, the control signal is sent by the controller 304 to a lubrication control module. When the elongation of the step chains on both sides is unbalanced, the times at which the first sensor and the second sensor detect the corresponding sensible members change compared with the times when the step chains on both sides of the escalator are not elongated or are equally elongated. Accordingly, it can be determined, based on the time difference between the corresponding sensing signals in the first and second signals, whether lubrication of the step chains needs to be adjusted. In an example where the first sensor and the second sensor are configured to generate pulse signals simultaneously when the escalator operates in an initial state, when the step chains on both sides of the escalator are either not elongated or elongated equally, the time difference between the sensors on both sides detecting the corresponding sensed members within one operation cycle of the escalator is zero. Conversely, when the step chains on both sides are elongated differently, the time difference in detecting the corresponding sensed members within one operation cycle of the escalator is non-zero. Therefore, it can be determined based on the time difference that the elongation of the step chains on both sides is unbalanced, and the lubrication of the step chains needs to be adjusted. Specifically, the degree of lubrication of the step chain that elongates more should be greater than that of the step chain that elongates less, so as to make the elongation of the step chains on both sides tend to be the same.

In examples of the present disclosure, the time difference is obtained by subtracting the time of the corresponding sensing signal in the non-set signal from the time of the sensing signal in the set signal, where one of the first and second signals is predefined as the set signal, and the other is the non-set signal. As such, in the process of controlling the escalator according to the embodiments of the present disclosure, the time of the sensing signal in the set signal is used as the minuend in the calculation of the time difference. In the following examples, the first signal may be used as a set signal, and the second signal may be used as a non-set signal.

In the examples of the present disclosure, the first side step chain is the step chain whose elongation condition is indicated by the first signal, also referred to as a first signal side step chain; the second side step chain is the step chain whose elongation condition is indicated by the second signal, also referred to as a second signal side step chain.

In further examples, the controller determines whether to adjust lubrication and how to adjust it based on the elongation difference between the step chains on both sides of the escalator. The elongation difference is the product of the time difference and an operation speed of the escalator. In some specific examples of the present disclosure, if the time difference is positive, the elongation difference is positive; if the time difference is negative, the elongation difference is negative. According to the embodiments of the present disclosure, a predetermined threshold for determining the degree of elongation difference is preset, and the threshold is a threshold range. When the elongation difference falls within the threshold range, according to the embodiments of the present disclosure, no control signal for adjusting lubrication is generated; when the elongation difference falls outside the threshold range, how to adjust the lubrication is determined based on the value of the elongation difference and the travel direction of the escalator.

In some specific examples, the first sensor 301 and the first sensed member 401, and the second sensor 302 and the second sensed member 402 are configured such that when the escalator operates in the initial state, the first sensor 301 and the second sensor 302 generate sensing signals simultaneously. For example, the first sensor 301 and the first sensed member 401 are arranged face-to-face in the initial state, and the second sensor 302 and the second sensed member 402 are arranged face-to-face in the initial state; alternatively, in the initial state, the distance between the first sensor 301 and the first sensed member 401 along the length direction of the escalator (i.e., along the travel direction of the escalator) is identical to the distance between the second sensor 302 and the second sensed member 402 along the length direction of the escalator, etc.

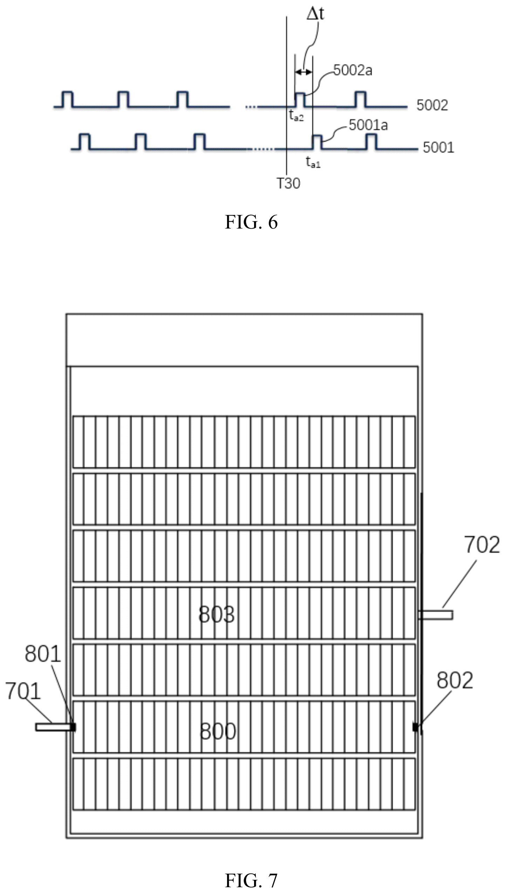

In some other examples, the first sensor 301 and the first sensed member 401, and the second sensor 302 and the second sensed member 402 are configured such that when the escalator operates in the initial state, the sensing signals are generated in sequence. For example, the first sensor generates a sensing signal prior to the second sensor, or vice versa. For example, in the initial state, the distance between the first sensor 301 and the first sensed member 401 along the length direction of the escalator is different from the distance between the second sensor 302 and the second sensed member 402 along the length direction of the escalator. FIG. 7 illustrates an example of such configuration. In the example illustrated by FIG. 7, the first sensed member 801 is arranged on a first side of the step 800, and the first sensor 701 is arranged face-to-face with it as in the initial state. The second sensed member 802 is arranged on a second side of the step 800, and the second sensor 702 is arranged in a staggered manner relative to the second sensed member 802 as in the initial state. Specifically, the second sensor 702 is arranged on the second side skirt panel facing other steps, for example, at a location directed toward step 803.

According to some embodiments of the present disclosure, the first sensor is disposed on a first side skirt panel of the escalator, and the second sensor is disposed on a second side skirt panel of the escalator. More specifically, the first sensor and the second sensor are respectively fixed onto corresponding skirt panels. In the example illustrated by FIG. 3, the first sensor 301 is fixed onto the skirt panel 303 of the first side, and the second sensor 302 is fixed onto the skirt panel 305 of the second side.

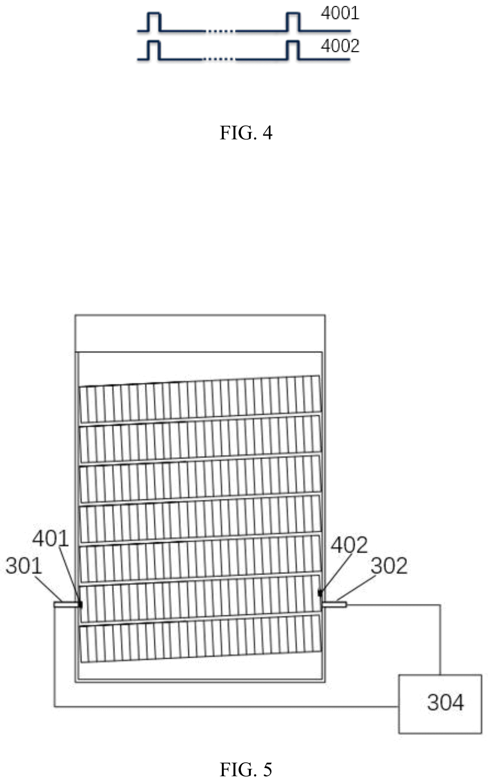

FIG. 3 illustrates step chains on both sides in the initial state. By way of example and not limitation, the first sensor 301 and the second sensor 302 are symmetrically fixed onto corresponding skirt panels; the first sensed member 401 and the second sensed member 402 are symmetrically disposed on both sides of the same step 400. FIG. 4 shows a first signal 4001 and a second signal 4002 formed during operation of the escalator illustrated by FIG. 3 in the initial state, where the first signal 4001 is formed by the sensing signal of the first sensor 301, and the second signal 4002 is formed by the sensing signal of the second sensor 302. Specifically, when the escalator in this example is in the initial state, i.e., before the steps tilt, the first sensor 301 and the second sensor 302 generate sensing signals simultaneously, with essentially no time difference between the corresponding sensing signals in the first and second signals. In the example illustrated by FIG. 7, before the steps tilt, the first sensor 801 and the second sensor 802 generate sensing signals at different times; in other words, there is an initial time difference between the corresponding sensing signals in the first and second signals. Once the steps tilt, the time difference between the corresponding sensing signals in the first and second signals changes and becomes different from the initial time difference.

According to the embodiments of the present disclosure, the first sensed member and the first sensor, and the second sensed member and the second sensor are arranged on the escalator in such a way that the time difference between the corresponding sensing signals in the first signal and the second signal is less than half of the duration of one operation cycle of the escalator. In more specific examples, the first sensed member and the second sensed member are arranged on the same step, or arranged with an offset of m steps, where m is one of 1, 2, 3, 4, and 5, for example, m is 1 or 2. The shorter the total length of the escalator, the smaller the value of m can be. It should be noted that in the examples of the present disclosure, two adjacent steps are defined as being offset by one step. For example, when m equals 1, the first sensed member and the second sensed member are arranged on two adjacent steps; when m equals 2, there is one intermediate step between the two steps where the first sensed member and the second sensed member are arranged, and so forth. The first sensor and the second sensor are arranged respectively on the skirt panels on two sides of the same step, such as the first sensor 301 and the second sensor 302 illustrated in FIG. 3; alternatively, they are arranged with an offset of n steps in the length direction of the escalator and arranged respectively on the skirt panels on two sides, such as the two sensors illustrated in FIG. 7 arranged with an offset of one step on the skirt panels on two sides. n is one of 1, 2, 3, 4, and 5, for example, n is 1 or 2. Similar to the arrangements of the sensed members, the shorter the total length of the escalator, the smaller the value of n can be. In addition, n and m may be the same or different.

In more specific examples, the first sensed member and the second sensed member are symmetrically disposed on two sides of the same step; the first sensor and the second sensor are symmetrically disposed relative to the escalator step. Specifically, the first sensor and the second sensor may be symmetrically disposed relative to the step on which the sensed members are disposed among multiple escalator steps, or symmetrically disposed relative to other escalator steps.

It should be understood that the duration of one operation cycle of an escalator is related to the length of the escalator, the number of steps, and the operating speed of the escalator. For example, if the escalator operates at a speed of 0.5 m/sec and the distance for one complete cycle is 10 meters, then one operation cycle takes 20 seconds; if the operating speed or the total length of the steps differs, the operation cycle duration will change accordingly. In the example where one operation cycle takes 20 seconds, if the escalator is configured with only one first sensor, one first sensed member, one second sensor and one second sensed member, then the first signal and the second signal each generate one pulse every 20 seconds.

FIG. 5 shows a non-initial state of the escalator illustrated in FIG. 3. The non-initial state in the present disclosure refers to a situation where the step chains on both sides of an escalator exhibit different degrees of elongation, resulting in step inclination. In this example, the inclination of the steps causes the second sensed member 402 to move above the second sensor 302, while the relative position between the first sensed member 401 and the first sensor 301 remains substantially unchanged. Obviously, after the inclination of the steps, the relative positions between the sensed members and the sensors differs from those in the initial state. Therefore, the timing at which the sensors detect the sensed members will change.

According to the examples of the present disclosure, the corresponding sensing signals in the first signal and the second signal are the sensing signals within the same operation cycle of the first and second signals formed after the escalator operates for a predetermined duration. The setting of the predetermined duration is, on one hand, to ensure that the escalator reaches stable operation; on the other hand, regardless of the step on which the sensed members are located when the escalator starts its current operation, after a certain period of operation, the time difference between the corresponding sensing signals can reflect the elongation difference.

According to some examples of the present disclosure, the predetermined threshold range is, for example, [-S1, S2], where the absolute values of -S1 and S2 may be the same or different, depending on practical applications. In the examples of the present disclosure, by way of example and not limitation, a set side sensor is the first side sensor, the first signal generated by the set side sensor is a set signal, and the step chain on the side corresponding to the set signal is a first side step chain. In contrast, the second side sensor is a non-set side sensor, the second signal generated by the non-set side sensor is a non-set signal, and the step chain on the side corresponding to the non-set signal is a second side step chain. In this example, the first side is also referred to as the set side, and the second side is referred to as the non-set side. The controller 304 is configured to, after the escalator operates for a predetermined duration, acquire the time of one sensing signal in the first signal serving as the set signal, acquire the time of the sensing signal in the second signal, serving as the non-set signal, which corresponds to said one sensing signal, and calculate the time difference Δt between these two times. The controller 304 calculates the elongation difference ΔS between the step chains on both sides based on the operation speed V of the escalator and the time difference Δt in accordance with the following formula (1):$ΔS = Δt \times V$ (1) wherein Δt represents the time difference between the corresponding sensing signals in the set signal and the non-set signal, wherein the time of the sensing signal in the set signal serves as the minuend. In addition, the time difference can be the time difference between the rising edges of the pulse signals, or the time difference between the falling edges.

The controller 34 compares the elongation difference determined according to formula (1) with the predetermined threshold, to determine whether the elongation difference between step chains on both sides needs to be adjusted. It should be noted that under the circumstance where the positions of the sensors and the sensed members are different, the predetermined threshold for the same escalator may be different. For example, in the case of the arrangements of the sensors and the sensed members respectively illustrated in FIG. 3 and FIG. 7, the predetermined threshold may differ.

According to the examples of the present disclosure, the controller 304 compares the calculated elongation difference with the predetermined threshold, and when the comparison results indicate that lubrication adjustment is necessary, generates a control signal that causes the degree of lubrication on the side of the two step chains with greater elongation to be higher than that on the other side. For example, increase the lubrication frequency or extend the lubrication time for the step chain on the side with greater elongation; alternatively, decrease the lubrication frequency or shorten the lubrication time for the other side; alternatively, increase the lubrication frequency for the step chain on the side with greater elongation while decreasing it for the other side, and so forth.

The escalator illustrated in FIG. 5 is an upward-moving escalator. After the escalator has operated for a predetermined duration such as 30 minutes, the times of the corresponding sensing signals in the first and second signals are acquired starting from time T30 (see FIG. 6). For example, within the first cycle starting from T30 in FIG. 6, the rising edge time tₐ₁ of the sensing signal 5001a in the first signal 5001 and the time tₐ₂ of the sensing signal 5002a in the second signal 5002 are acquired. The time difference ΔT is then calculated by subtracting tₐ₂ from tₐ₁. According to the examples of the present disclosure, the time of the sensing signal in the first signal 5001 and the time of the corresponding sensing signal in the second signal 5002 within the next cycle can be further acquired to calculate the time difference. In further examples, the time of the sensing signal in the first signal 5001 and the time of the corresponding sensing signal in the second signal 5002 within a later cycle can also be acquired to calculate the time difference. As such, a plurality of elongation differences can be obtained by calculating a plurality of time differences, and the plurality of elongation differences are each compared with the predetermined threshold range. If the comparison results of each or a majority of the calculated elongation differences with the threshold range indicate that lubrication of the step chains needs adjustment, a control signal that causes the degree of lubrication on the side of the first and second side step chains with greater elongation to be higher than that on the other side will be generated. Compared with calculating one elongation difference and determining whether to adjust the lubrication operation, based on the comparison between said one elongation difference and the threshold range, calculating a plurality of elongation differences and determining whether to adjust the lubrication operation based on the comparison results of all or a majority of the calculated elongation differences with the threshold range is more accurate.

According to this example, when the escalator is an upward-moving escalator and the calculated elongation difference is positive and falls outside the threshold range, the controller 34 determines that the current elongation difference between the two sides has exceeded an allowable range and requires adjustment. Moreover, the step chain corresponding to the first signal, which serves as the set signal in this example, elongates more, i.e., the first side step chain elongates more. As such, the controller 34 generates a control signal that causes the degree of lubrication of the first side step chain to be greater than the degree of lubrication of the second side step chain. When the escalator is an upward-moving escalator and the calculated elongation difference is negative and falls outside the threshold range, the controller 34 determines that the current elongation difference between the two sides has exceeded an allowable range and requires adjustment. Moreover, the step chain corresponding to the second signal, which serves as the non-set signal in this example, elongates more, i.e., the second side step chain elongates more. As such, the controller 34 generates a control signal that causes the degree of lubrication of the second side step chain to be greater than the degree of lubrication of the first side step chain.

For example, when the escalator in FIG. 5 is an upward-moving escalator, after operating for a predetermined duration, the first sensor 301 first detects the first sensed member 401 while the second sensor 302 later detects the second sensed member 402. As such, the time when the first sensor 301 generates a sensing signal is earlier than the time when the second sensor 302 generates a corresponding sensing signal, and the time difference is smaller than 0, so the calculated elongation difference is negative. Conversely, if after the escalator operates for a predetermined duration, the second sensor first detects the second sensed member while the first sensor later detects the first sensed member, the time difference calculated within the same cycle after the predetermined duration is greater than 0, and the calculated elongation difference is positive. When the elongation difference falls outside the predetermined threshold, it is determined that the degree of elongation of the first side step chain is greater than that of the second side step chain, i.e., the first side of the step tilts downward.

When the escalator in FIG. 5 is a downward-moving escalator, after the escalator has operated for a predetermined duration, the second sensor 302 first detects the second sensed member 402 while the first sensor 301 later detects the first sensed member 401. As such, the time difference calculated within the same cycle after the predetermined duration is greater than 0, because the set signal (i.e., the minuend for calculating the time difference) is the first signal (the signal generated by the first sensor), and the calculated elongation difference is positive. If the elongation difference falls outside the predetermined threshold range, it is determined that the current elongation difference between the two sides has exceeded an allowable range and requires adjustment. In addition, the second side step chain exhibits a greater degree of elongation than the first side step chain, i.e., the second side of the step tilts downward. As such, the controller 34 generates a control signal that causes the degree of lubrication of the second side step chain to be higher than the degree of lubrication of the first side step chain. Conversely, if the escalator has operated for a predetermined duration, and the first sensor 301 first detects the first sensed member 401 while the second sensor 302 later detects the second sensed member 402, the time difference calculated within the same cycle after the predetermined duration is smaller than 0, and the calculated elongation differences is negative. If the negative number falls outside the predetermined threshold, it is determined that the current elongation difference between the two sides has exceeded an allowable range and requires adjustment. In addition, it is determined that the first side step chain exhibits a greater degree of elongation than the second side step chain, i.e., the first side of the step tilts downward. As such, the controller 304 generates a control signal that causes the degree of lubrication of the first side step chain to be higher than the degree of lubrication of the second side step chain.

As illustrated in FIG. 7, the first sensed member 801 is arranged on a first side of the step 800, and the first sensor 701 is arranged face-to-face with it as in the initial state. The second sensed member 802 is arranged on a second side of the step 800, and the second sensor 702 is arranged in a staggered manner relative to the second sensed member 802 as in the initial state. Specifically, the second sensor 702 is arranged on the second skirt panel facing other steps, such as at the location directed towards step 803. During the operation of the escalator in the initial state, there is an initial time difference ΔTinitial between the pulse signal generated by the first sensor 701 and the corresponding pulse signal generated by the second sensor 702. Correspondingly, there is an initial step chain length difference ΔSinitial. If the escalator in this example is consistent with the escalators illustrated in FIG 3, FIG. 4 and FIG. 5 in terms of operation speed and model, the aforementioned threshold range can be applied to FIG. 7, provided that the initial step chain length difference ΔSinitial is subtracted.

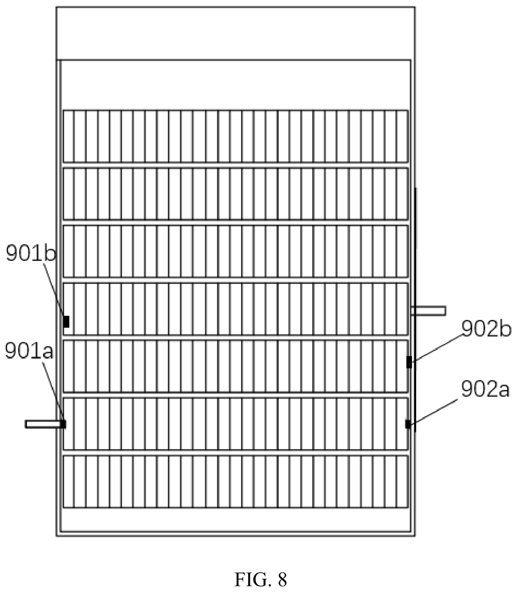

In some optional examples, two or more first sensed members and two or more second sensed members may be disposed. This way, even if one of the sensed members is worn out, the time difference can still be calculated based on the sensing signal generated by the other sensed member. For example, in FIG. 8, the first side is configured with sensed members 901a and 901b, and the second side is configured with sensors 902a and 902b. In the example of FIG. 8, the sensing signal generated by one sensor detecting the sensed member 901a may correspond to the sensing signal generated by the other sensor detecting the sensed member 902a; the sensing signal generated by one sensor detecting the sensed member 901b may correspond to the sensing signal generated by the other sensor sensing the sensed member 902b.

In some optional examples, two or more first sensors and two or more second sensors may be disposed. In such a configuration, the first sensing element and the second sensing element may each be present in quantities of one, two, or more.

In some further examples, the same number of first sensors and second sensors, and the same number of sensed members may be disposed. However, the number of sensors and the number of sensed members may be the same or different.

It should be noted that regardless of the number of sensors and sensed members, when calculating the time difference, the corresponding sensing signals refer to the sensing signals of the same comparison group. For example, in the example of FIG. 8, if the sensing signal generated by the sensed member 901a and the sensing signal generated by the sensed member 901b form a comparison group, and the sensing signal generated by the sensed member 902a and the sensing signal generated by the sensed member 902b form a separate comparison group, then during the comparison process, the times of the sensing signals within each respective comparison group are always compared, thereby avoiding occasionally comparing the time of the sensing signal from sensed member 901a with the time of the sensing signal from sensed member 902b. In summary, when a plurality of sensors and/or sensed members are disposed, the positional arrangement and the other configuration of the sensors and the sensed members within the same comparison group are similar to those of the sensors and sensed members in various examples described above in conjunction with FIGS. 2 to 7.

According to the examples of the present disclosure, a method for an escalator is further provided. In this embodiment, the escalator comprises a first sensed member arranged on a first side of a step; a first sensor arranged on the escalator and configured to, during operation of the escalator, detect the first sensed member to generate a sensing signal, thereby forming a first signal; a second sensed member arranged on a second side of the step; and a second sensor arranged on the escalator and configured to, during operation of the escalator, detect the second sensed member to generate a sensing signal, thereby forming a second signal. The escalator is, for example, any one of the escalators described above in conjunction with the drawings. The method comprises generating a control signal for adjusting lubrication when it is determined, based on a time difference between corresponding sensing signals in the first and second signals, that lubrication of step chains needs adjustment. Specifically, the elongation difference between the step chains on both sides of the escalator is determined based on the time difference between corresponding sensing signals in the first and second signals and an operation speed of the escalator, and when the elongation difference indicates that lubrication of step chains needs adjustment, a control signal for adjusting lubrication is generated. Among them, the corresponding sensing signals in the first signal and the second signal are the sensing signals within the same cycle in the first and second signals formed after the escalator has operated for a predetermined duration.

The method for an escalator as illustrated in the present disclosure can be implemented by any one of the escalators described above in conjunction with the drawings. Other escalators configured with sensors and sensed members can also implement the method for an escalator according to the present disclosure. For example, the escalator as illustrated in FIG. 1, after being configured with sensed members on the steps and with sensors on the skirt panels, can implement the method for an escalator according to various embodiments of the present disclosure, thereby determining whether to adjust lubrication operation based on an elongation difference between the side chains on both sides and generating a control signal for adjusting lubrication based on the elongation difference. The method according to the examples of the present disclosure can be implemented by a controller of the escalator, for example, a controller of the escalator control system, such as the controller 115 in FIG. 1. In more specific examples, the method illustrated in the present disclosure can be implemented as program instructions, which are executed by a controller to implement the process described herein.

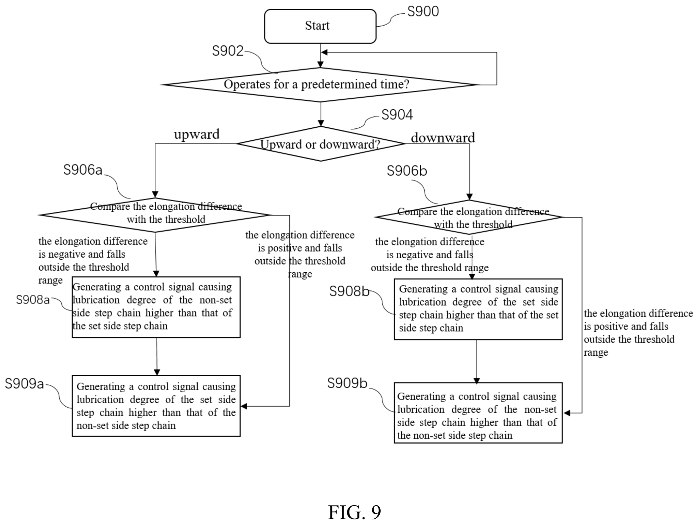

FIG. 9 is a flow diagram of a method for an escalator according to one embodiment of the present disclosure.

In step S900, the execution of the method begins.

In step S902, it is determined whether the escalator is operating and whether it has operated for a predetermined duration, such as 30 minutes. If the determination result in step S902 is that the escalator is operating and has operated for the predetermined duration, the process proceeds to step S904; otherwise, the process remains in step S902.

In step S904, it is determined whether the escalator is upward-moving or downward-moving. If it is determined to be upward-moving, the process proceeds to step S906a; otherwise, the process proceeds to step S906b.

In step S906a, an elongation difference between step chains on both sides is determined based on a time difference between corresponding pulse signals of the set signal and the non-set signal, and a comparison is made between the determined elongation difference and a predetermined threshold range. If the determined elongation difference is negative and falls outside the predetermined threshold range, the process proceeds to step S908a. If the determined elongation difference is positive and falls outside the predetermined threshold range, the process proceeds to step S909a.

In step S908a, it is determined that the degree of elongation of the step chain corresponding to the non-set signal (also referred to as the non-set side step chain) is greater than that of the step chain corresponding to the set signal (also referred to as the set side step chain), and a control signal that causes the degree of lubrication of the non-set side step chain to be higher than that of the set side step chain is generated.

In step S909a, it is determined that the degree of elongation of the set side step chain is greater than that of the non-set side step chain, and a control signal that causes the degree of lubrication of the set side step chain to be higher than that of the non-set side step chain is generated.

In step S906b, the elongation difference between step chains on both sides is determined based on the time difference between the corresponding pulse signals in the set side signal and the non-set side signal, and the determined elongation difference is compared with the predetermined threshold range. If the determined elongation difference is negative and falls outside the predetermined threshold range, the process proceeds to step S908b. If the determined elongation difference is positive and falls outside the predetermined threshold range, the process proceeds to step S909b.

In step S908b, it is determined that the degree of elongation of the set side step chain is greater than that of the non-set side step chain, and a control signal that causes the degree of lubrication of the set side step chain to be higher than that of the non-set side step chain is generated.

In step S909b, it is determined that the degree of elongation of the non-set side step chain is greater than that of the set side step chain, and a control signal that causes the degree of lubrication of the non-set side step chain to be higher than that of the set side step chain is generated.

When an escalator is configured with sensors and sensed members, and the method for an escalator according to the present disclosure is executed, the escalator can be implemented as the one described in the embodiments of the present disclosure, such as any one of those described above with reference to FIGS. 2 to 8.

The escalator of the present disclosure is configured with sensed members such as color codes on both sides of a step, and sensors arranged on both sides of the skirt panels of the escalator, each corresponding to the sensed members. As such, every time the escalator operates for one cycle, sensing signals for each side are generated. The elongation difference between the side chains on both sides is determined based on the time difference between corresponding sensing signals, and accordingly, it is determined whether to generate a lubrication signal for adjusting the step chains. In this way, any change in the elongation of the step chains can be automatically detected during the operation of the escalator, and a control signal is generated based on the change in the elongation of the step chains to adjust the lubrication signal. This ensures that the degree of lubrication of the step chain on the side that elongates more is greater than that on the other side, thereby enabling the elongation of both sides to tend to consistency as soon as possible.

It should be noted that the arrangement of the sensors and the sensed members described above in conjunction with the drawings is for illustrative purposes only rather than limitation. Other methods capable of generating a first signal and a second signal through detection, which are not listed herein, may also be applicable.

The present disclosure further provides a program product, comprising program instructions that, when executed by an escalator comprising sensors and sensed members as described in the present disclosure, can perform any one of the methods described according to the embodiments of the present disclosure.

Although the embodiments of the present disclosure have been illustrated and described in detail to explain the principles of the present disclosure, it should be understood that the present disclosure may be implemented in other ways without departing from such principles, for example, by new embodiments obtained by combining the features of various embodiments described herein.

## Claims

1. A conveying device, comprising:
a first sensor and a second sensor, respectively arranged on the conveying device;
a first sensed member, arranged on a first side of a step of the conveying device in a manner such that the first sensor detects the first sensed member to generate a sensing signal when the conveying device is in operation, thereby forming a first signal;
a second sensed member, arranged on a second side of the step of the conveying device in a manner such that the second sensor detects the second sensed member to generate a sensing signal when the conveying device is in operation, thereby forming a second signal; and
a controller, configured to generate a control signal for adjusting lubrication when it is determined that the lubrication of step chains needs to be adjusted based on a time difference between corresponding sensing signals in the first signal and the second signal.

2. The conveying device according to claim 1, wherein the controller is further configured to:
determine an elongation difference between a first side step chain and a second side step chain based on the time difference between the corresponding sensing signals in the first signal and the second signal and an operation speed of the conveying device; and generate the control signal for adjusting lubrication when the elongation difference indicates that the lubrication of step chains needs to be adjusted;
preferably, wherein the corresponding sensing signals in the first signal and the second signal are the sensing signals within the same cycle in the first signal and the second signal formed after the conveying device has operated for a predetermined duration.

3. The conveying device according to claim 2, wherein the controller is further configured to:
compare the elongation difference with a predetermined threshold, and preferably wherein the value of the predetermined threshold is related to arrangements of the first sensor, the first sensed member, the second sensor, and the second sensed member; and
generate a control signal that causes the degree of lubrication of the step chain on the side with greater elongation of the first side step chain and the second side step chain to be higher than that of the other side when the comparison result indicates that the lubrication of the step chains needs to be adjusted.

4. The conveying device according to any one of claims 1 to 3, wherein one of the first signal and the second signal is a predefined set signal and the other is a non-set signal, and the controller is configured to obtain the time difference by subtracting the time of the corresponding sensing signal in the non-set signal from the time of the sensing signal in the set signal.

5. The conveying device according to claim 4, wherein the predetermined threshold is a threshold range, and the controller is further configured to:
generate a control signal that causes the degree of lubrication of the step chain on the side corresponding to the set signal to be higher than the degree of lubrication of the step chain on the other side when the conveying device is an upward-moving escalator, and the calculated elongation difference is positive and falls outside the threshold range;
generate a control signal that causes the degree of lubrication of the step chain on the side corresponding to the non-set signal to be higher than the degree of lubrication of the step chain on the other side when the conveying device is an upward-moving escalator, the calculated elongation difference is negative and falls outside the threshold range;
generate a control signal that causes the degree of lubrication of the step chain on the side corresponding to the set signal to be higher than the degree of lubrication of the step chain on the other side when the conveying device is a downward-moving escalator, the calculated elongation difference is negative and falls outside the threshold range;
generate a control signal that causes the degree of lubrication of the step chain on the side corresponding to the non-set signal to be higher than the degree of lubrication of the step chain on the other side when the conveying device is a downward-moving escalator, and the calculated elongation difference is positive and falls outside the threshold range.

6. The conveying device according to any one of claims 1 to 5, wherein the first sensor is arranged on a skirt panel of the conveying device corresponding to the first side of the step, and the second sensor is arranged on a skirt panel of the conveying device corresponding to the second side of the step.

7. The conveying device according to claim 6, wherein the first sensed member and the second sensed member are respectively arranged on the first side and the second side of the same step, and the first sensor and the second sensor are symmetrically arranged relative to the step of the conveying device.

8. The conveying device according to claim 6, wherein the first sensed member and the first sensor, and the second sensed member and the second sensor are arranged in a manner such that the time difference between corresponding sensing signals in the first signal and the second signal is less than 1/2 of the duration of one operation cycle of the conveying device.

9. The conveying device according to claim 8, wherein the first sensed member and the second sensed member are arranged on the same step, or offset by m steps, where m is one of 1, 2, 3, 4, and 5; preferably, wherein any one of the first sensed member and the second sensed member is provided in a plurality; and/or any one of the first sensor and the second sensor is provided in a plurality; and/or
the first sensor and the second sensor are respectively arranged on the skirt panels on two sides of the same step, or offset by n steps in the length direction of the conveying device and arranged respectively on the skirt panels on two sides, where n is one of 1, 2, 3, 4, and 5; preferably, wherein the first sensor and the second sensor are color sensors respectively, and the first sensed member and the second sensed member are color markers arranged respectively on the step.

10. A method for a conveying device, where the conveying device comprises a first sensed member arranged on a first side of a step, a first sensor arranged on the conveying device and configured to detect the first sensed member to generate a sensing signal thereby forming a first signal when the conveying device is in operation, a second sensed member arranged on a second side of the step of the conveying device, and a second sensor arranged on the conveying device and configured to detect the second sensed member to generate a sensing signal thereby forming a second signal when the conveying device is in operation, the method comprising:
generating a control signal for adjusting lubrication when it is determined that the lubrication of the step chains needs to be adjusted, based on a time difference between corresponding sensing signals in the first signal and the second signal.

11. The method according to claim 10, comprising:
determining an elongation difference between a first side step chain and a second side step chain based on the time difference between the corresponding sensing signals in the first signal and the second signal and an operation speed of the conveying device; and
generating the control signal for adjusting lubrication when the elongation difference indicates that lubrication of step chains needs to be adjusted; preferably, wherein the corresponding sensing signals in the first signal and the second signal are the sensing signals within the same cycle in the first and second signals formed after the conveying device has operated for a predetermined duration.

12. The method according to claim 11, further comprising:
comparing the elongation difference with a predetermined threshold; and
generating a control signal that causes the degree of lubrication of the step chain on the side with greater elongation of the first side step chain and the second side step chain to be higher than that of the other side when the comparison results indicate that lubrication of the step chains needs to be adjusted.

13. The method according to any one of claims 11 to 12, wherein one of the first and second signals is a predefined set signal and the other is a non-set signal, and the time difference is obtained by subtracting the time of the corresponding sensing signal in the non-set signal from the time of the sensing signal in the set signal.

14. The method according to claim 13, wherein the predetermined threshold is a threshold range, the method further comprising:
generating a control signal that causes the degree of lubrication of the step chain on the side corresponding to the set signal to be higher than the degree of lubrication of the step chain on the other side when the conveying device is an upward-moving escalator, the calculated elongation difference is positive and falls outside the threshold range,
generating a control signal that causes the degree of lubrication of the step chain on the side corresponding to the non-set signal to be higher than the degree of lubrication of the step chain on the other side when the conveying device is an upward-moving escalator, and the calculated elongation difference is negative and falls outside the threshold range;
generating a control signal that causes the degree of lubrication of the step chain on the side corresponding to the set signal to be higher than the degree of lubrication of the step chain on the other side when the conveying device is a downward-moving escalator, and the calculated elongation difference is negative and falls outside the threshold range; and
generating a control signal that causes the degree of lubrication of the step chain on the side corresponding to the non-set signal to be higher than the degree of lubrication of the step chain on the other side when the conveying device is a downward-moving escalator, and the calculated elongation difference is positive and falls outside the threshold range.

15. A program product, comprising program instructions that, when executed by a conveying device, can implement the method according to any one of claims 10 to 14.
